# EUROPEAN PATENT APPLICATION

(11) **EP 2 437 457 A1**
(43) Date of publication of application: **04.04.2012**
(21) Application number: 10182009.0
(22) Date of filing: 29.09.2010
(51) Int. Cl.: H04L 29/06, H04L 29/08

(54) **Method to exchange application specific information for outgoing calls between two mobile devices**

(71) Applicant: RESEARCH IN MOTION LIMITED, Waterloo, Ontario N2L 3W8 (CA)
(72) Inventor: Martin, Daryl Joseph, Waterloo Ontario N2L 5R9 (CA)
(74) Representative: Roberts, Gwilym Vaughan

(57) **Abstract**

A user equipment (UE) comprising at least one component configured to send an indication message that indicates application information for a communications session, wherein the indication message comprises data to indicate application information to a recipient for display by the recipient during a communication session with the UE. Also disclosed is a method implemented on a UE comprising generating data for application information for a communications session, and sending an indication message that indicates the application information for use to display the application information by a recipient of the indication message during the communications session.

## Description

### BACKGROUND

As used herein, the terms "user equipment" and "UE" might in some cases refer to mobile devices such as mobile telephones, mobile devices, personal digital assistants, handheld or laptop computers, and similar devices that have telecommunications capabilities. Such a UE might consist of a UE and its associated removable memory module, such as but not limited to a Universal Integrated Circuit Card (UICC) that includes a Subscriber Identity Module (SIM) application, a Universal Subscriber Identity Module (USIM) application, or a Removable User Identity Module (R-UIM) application. Alternatively, such a UE might consist of the device itself without such a module. In other cases, the term "UE" might refer to devices that have similar capabilities but that are not transportable, such as desktop computers, set-top boxes, or network appliances. The term "UE" can also refer to any hardware or software component that can terminate a communications session for a user. Also, the terms "user equipment," "UE," "user agent," "UA," "user device" and "user node" might be used synonymously herein.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.

Figure 1 is a schematic diagram of a communications system that allows two UEs to communicate with each other according to an embodiment of the disclosure.

Figure 2 is a protocol diagram of a signaling scheme between two UEs to display and share application specific information during a communications session according to an embodiment of the disclosure.

Figure 3 is a flowchart of a method for displaying application information during a communications session between two UEs according to an embodiment of the disclosure.

Figure 4 is a flowchart of a method for displaying application information during a communications session between two UEs according to another embodiment of the disclosure.

Figure 5 illustrates a processor and related components suitable for implementing the several embodiments of the present disclosure.

### DETAILED DESCRIPTION

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

When using a UE, e.g. a mobile device, a user may initiate an outgoing call to discuss an application on the UE. For example, a first user may call or chat with a second user about a scheduled calendar event or a received email to discuss the calendar event or email. The first user and the second user may establish a voice or video call or a chat session to discuss a scheduled calendar event or a received email that may be displayed on the first UE. However, if the second user wishes to view information from the calendar event or email on a second UE, for example during the call or chat session, the second user may need to manually search and access such information on the second UE. Such a process may be time-consuming and cause delays in such real-time communications sessions.

Disclosed herein is a method, device, and/or system for allowing the second user to view on a second UE an application or application information that is discussed between the users of the first and second devices and in some cases view the same application information viewed by the first user on the first UE during a real-time communications session, a call, or chat session. For example, a first UE may send a signal or message that indicates the application information to a second UE during the call setup time or perhaps other times during the communications session. The first UE may transmit the signal or message to the second UE via a session initiation protocol (SIP) to update the user interface of the second UE. While SIP is used as an exemplary protocol herein this disclosure is not limited to use with SIP and other signaling or communication protocols might also be used. The message may be sent from an application, for example, being displayed on the first UE and subsequently used to display the same application or related application information on the second UE. Thus, the second user may access or view the application information, in a relatively easy and fast manner, while discussing the information with the first user.

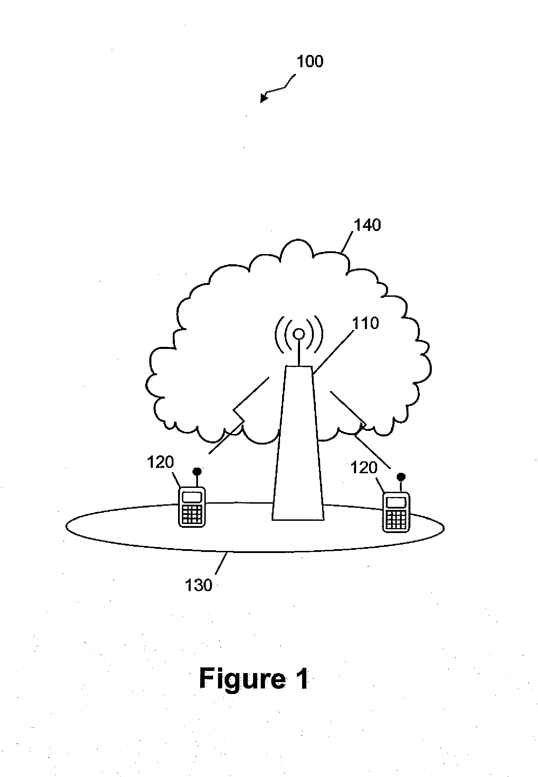

Figure 1 illustrates an embodiment of a radio access network (RAN) 100, which may be a long-term evolution (LTE) or LTE-Advanced (LTE-A), as described in the Third Generation Partnership Project (3GPP), or other well known or after developed networks. In this example, an LTE or LTE-A system might include an Evolved Universal Terrestrial Radio Access Network (E-UTRAN) node B (or eNB), a wireless access point, or a similar component rather than a traditional base station. Figure 1 is exemplary and may have other components or arrangements in other embodiments. In an embodiment, the RAN 100 may comprise at least one access device 110 and at least one UE 120, which may be both located within a cell 130.

As used herein, the term "access device" refers to any component of the wireless network, such as a traditional base station, a wireless access point, or an LTE or LTE-A node B or eNB, that creates a geographical area of reception and transmission coverage allowing a UE 120 or a relay node (not shown) to access or communicate with other components in a telecommunications system, such as second UE 120. In this document, the term "access node" and "access device" may be used interchangeably, but it is understood that an access node may comprise a plurality of hardware and software components.

The access device 110 may communicate with any UE 120 within the same cell 130, directly via a direct link, such as in a UTRAN. The cell 130 may be a geographical area of reception and transmission coverage. For instance, the direct link may be a point-to-point link established between the access device 110 and the UE 120 and used to transmit and receive signals between the two. Alternatively, the access devices 110 may communicate with any UE 120 in the same cell 130 over shared links, such as in an E-UTRAN. For instance, the shared links may comprise an uplink shared channel and a downlink shared channel. Additionally, the access devices 110 may communicate with other components or devices to provide for the components of the RAN 100 access to any other network 140, for instance using similar or different network protocols or technologies. In an embodiment, the UEs 120 may move about between different cells 130 and their communications may be handed-over between the different cells 130, where the UEs 120 may communicate with different access devices 110.

In some embodiments, the UEs 120 may communicate via a combination of wireless and wired networks. The networks may include the RAN 100, a Wireless LAN (WLAN) network, an Ethernet based network, an Internet Protocol (IP) based network, a Digital Subscriber Line (DSL) network, an Optical communications network, and/or any other wireless and wired networks that may be used to exchange communications between the UEs 120. The communications between the UEs 120 may comprise voice and/or video calls, emails, text/media messages (e.g. using Short Message Service (SMS) or Multimedia Messaging Service (MMS)), and/or any other data or message exchanges.

The first UE 120 may establish a real-time communications session, such as a voice call with a second UE 120 or the first UE 120 may communicate via a chat session with the second UE 120. The call or chat session may be related to a displayed application or application information, which may be discussed between the first user and the second user. For example, the first user and the second user may discuss a meeting scheduled in a calendar, a web page content, or an email content during the call or chat session. The displayed application may correspond to a calendar client, a web browser, or an email client. The application information may correspond to a scheduled meeting, a web page, or an email. In other scenarios, the two users may discuss some displayed application information, such as a Word document or a Power Point slide during the communications session. In any of the real-time communication scenarios above, it may be advantageous to assist the second user in readily identifying and then accessing or viewing the application information related to the call or chat session. This may be useful for many reasons including to reduce communications time and/or charges and improve or facilitate discussions.

In an embodiment, the first UE 120 may be configured to transmit to the second UE 120 a signal or message that indicates application specific information as part of a call, chat, or any other real-time communications session established between the first UE 130 and the second UE 120. In an embodiment, the application and/or related information may be previously shared between the first UE 120 and the second UE 120 before establishing the communications session. For instance, the application and/or related information may be stored in both the first UE 120 and the second UE 120, and hence may be indicated by the first UE 120 to the second UE 120 during the communications session. In another embodiment, the first UE 120 may send the application and/or related information to the second UE 120 during the communications session between the first UE 120 and the second UE 120. In some instances the message may indicate the location of the information, perhaps as being located on the second UE 120 or elsewhere such as on a remote server. The application information may be indicated or sent by the first UE 120 to the second UE 120 in a SIP message or signal or any other suitable communication protocol or message. The message may be sent by the first UE 120 as part of a call between the first UE 120 and the second UE 120 or separately using a different protocol than that used to establish the call. For example, the first UE 120 and the second UE 120 may establish a call using a voice channel or a first protocol. Subsequently, the first UE 120 may send a SIP other type of message to the second UE 120 using a second protocol.

Further, the first UE 120 may transmit the signal or message to the second UE 120 using an application displayed on the first UE 120, such as a web browser, an email client, or a calendar client. The application may be used to send the signal or message during the setup time of the communications session or subsequently during the established communications session. For instance, the indication message may be sent using SIP INVITE message in the RAN 100, such as an Unstructured Supplementary Service Data (USSD), a SMS, or an IP message. The indication message may specify the application and/or related information that assists the UE 120 in locating and retrieving the application and/or related information. The indication message may comprise information, such as a Globally Unique Identifier (GUID) or code, that may be used to locate and display the application information on the second UE 120 using the appropriate application. For instance, the GUID and/or code in the indication message may be used to update the user interface (e.g. screen) of the second UE 120 to display the same information or application that is displayed on the first UE 120. Thus, the two users may view and discuss the same information during the real-time communications session. In some embodiments, only the second user of the second UE120 may have an interest in displaying and viewing the relevant information, for example during the call.

In some embodiments, the UE 120 may send a GUID without application specific information to the second UE 120. The GUID may be generated, e.g. by the first UE 120, using the Application Name, Subject, and/or any other criteria, to obtain unique GUID that is associated with a specific application. The GUID may be generated using MD5, SHA-256, SHA-512, or any other known algorithm using application specific data such as Application Name, Subject, etc. For example, the message may comprise:
<AppData> ABCDEFGHIJKLMNOP <AppDATA> , where ABCDEFGHIJKLMNOP is the unique GUID that identifies a specific application. Thus, the second UE 120 may compare the GUID to a list of values to determine which application is indicated by the first UE 120.

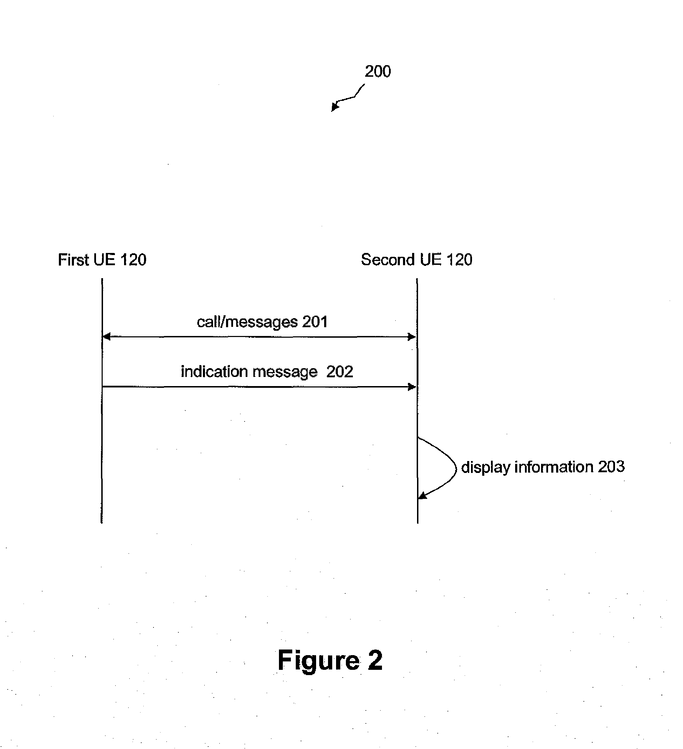

Figure 2 illustrates a signaling scheme 200 between two UEs 120 that allow the two corresponding users to view and discuss application specific information, e.g. during a call, a chat session, or any other real-time communications session 201. First, the first UE 120 and the second UE 120 may establish the communications session, which may be initiated by either one of the two users. For example, the first user may make a call (such as a phone call) to the second user to discuss some details about a meeting that is scheduled on the first user's calendar with the second user, which may be an organizer or participant of the meeting. Alternatively, the call may be initiated by the second user.

Next, the first UE 120 may send an indication message 202, for example using SIP messaging, to the second UE 120 to identify the application specific information. The first user may send the indication message 202 from the first UE 120, for example by forwarding an email, a web address, or a scheduled task to the second UE 120. Although, the indication message 202 in Fig. 2 is sent after initiating the communication session 201 (e.g. the voice call), the application specific information may be sent in the indication message 202 at any time prior to the communication session 201. In some cases, the indication message 202 may be sent from an application displayed on the first UE 120. For example, the first user may send a SMS or IP message to the second user using a calendar client application that shows the scheduled meeting on the first UE 120. However in other cases, the first user may send the indication message 202 or the application specific information without displaying the information or the related application on the first UE 120. Subsequently, the second UE 120 may receive the indication message 202 and use the information in the indication message 202 to display the scheduled meeting information to the second user. For example, the second UE 120 may process the indication message 202 and use its content to open a calendar client similar to the first UE 120 and/or display the scheduled meeting information.

In another example, the first user may call the second user to discuss email related information, for example in reply to an email or message from the second user. The first user may then send an indication message to the second user that comprises the application specific information, such as the email content, and/or a message reference identifier (ID), which may then be used by the second user to update the display of the second UE 120 with the email content. In another scenario, the first user may call the second user to discuss a web page content, which may then be displayed on the second UE 120. The first user may send the indication message 202 to the second user, which may be used to update the screen on the second UE 120 and display the web page content or related information to the second user. In this case the SIP message might contain the Uniform Resource Locator (URL) of the web page, or might contain the actual web page HTML, with appropriate mechanisms on the second UE 120 to launch a browser to view the content.

In an embodiment, the signaling scheme 200 may be used to send the indication message 202 to a plurality of UEs 120. For instance, the first UE 120 may send the indication message 202 to a plurality of second UEs 120 to identify the application specific information and update the displays of the second UEs 120, as described above. Alternatively, a group of UEs 120, e.g. in a communication session, may receive the indication message 202, display the indicated information on their user interface, and/or forward the received indication message 202 to another UE 120 to update its screen, in the manner described above. For example, a plurality of users in a conference call session may receive the same or different indication messages 202 on their UEs 120 from any other UE(s) 120. The UEs 120 that receive the indication message 202 may then use the application specific information in the message to display to the users the indicated information, e.g. email, document, web content, pictures, etc.

The application specific information indicated in the indication message 202 may be any type of data that is used to display or play content on a user interface of the second UE 120. For instance, the data may be any binary data that indicate an application or content, which may be stored on the second UE 120, such as a GUID that is used to find an email stored on the UE 120. Alternatively, the data may be used by the second UE 120 to obtain the application specific information, such as a web address (e.g. URL) that is used to display a web page on the second UE 120. The application specific information may indicate text or visual content that may be displayed on the second UE 120, e.g. during a voice or conference call. Additionally or alternatively, the application specific information may indicate voice, and/or video data that may be displayed during a chat session, such as using instant messaging (IM). For example, the data may comprise emails, web pages, presentation slides, word documents, pictures, voice recordings, sound or music content, video clips, any other media, or combinations thereof.

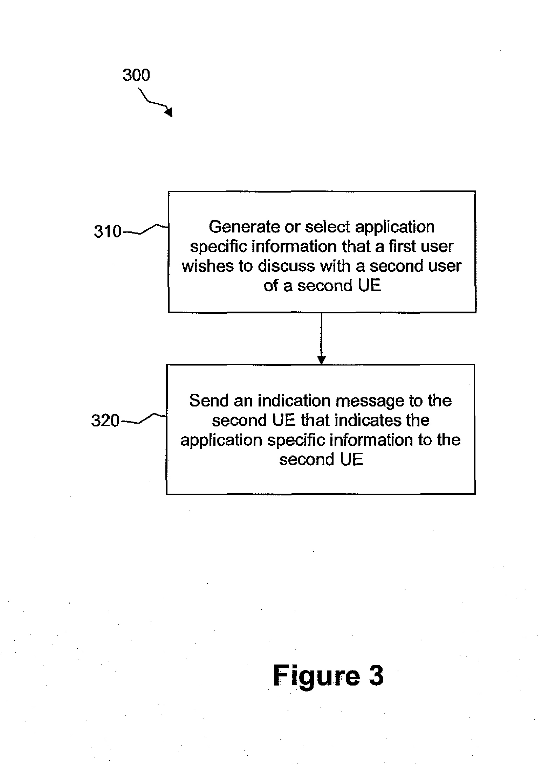

Figure 3 illustrates an embodiment of a method 300 for displaying information for an application on the second UE 120 that may be indicated by the first UE 120. The method 300 may be implemented at the first UE 120. At step 310, the first UE 120 may generate or select application specific information that the first user wishes to discuss with the second user. For example, the first UE 120 may generate a GUID or code that indicates an email or a scheduled task or meeting that was received from the second UE 120. Alternatively, the first UE 120 may select a URL that indicates web content. In one embodiment, the first UE 120 may also start or display the application specific information on its user interface or display screen, for instance upon a prompt from the first user. For example, the first user may open a calendar client, an email client, or a web page browser on the first UE 120 before initiating, upon initiation of, or during a communications session with the second user, such as a voice or video call, to discuss application related information with the second user.

At step 320, the first UE may send an indication message to the second UE that indicates the application specific information to the second UE. For instance, the first UE 120 may send a SIP INVITE message to the second UE 120 that may indicate the application specific information on the first UE 120. In some cases, the indication message may be sent from an application displayed on the first UE 120, such as using a send or transmit option provided by the application. That is the calendar application might provide a drop-down menu that includes the option of sending a message about a specific calendar event associated with a call about to be initiated or a preexisting call. The message, such as a SIP message, may comprise an encoded indication of the application information, which may invoke or trigger the display of the application or related information at the second UE 120.

In an embodiment, the application information may be embedded in a SIP message in the following format:
<AppData> ApplicationName:GUID:Subject</APPData>,
   where ApplicationName indicates the name of the application, GUID identifies the application and/or the application information, and Subject comprises the application information content. The GUID may be obtained or calculated using different algorithms for different applications. For example, a calendar application may use the start/end time to represent the GUID and an email application may use a reference ID or a hash of certain fields to represent the GUID. For example, the SIP message may comprise embedded metadata associated with the application information, such as:
   <AppData> MIME:1234567891011121314:Re: Plans Tonight</APPData> or
   <AppData> EMAIL:1234567891011121314:Re: Plans Tonight</APPData>.

In another embodiment, the first user may open an attachment, such as from a received email message, in the first UE 120 that comprises a meeting request before or after initiating a conference call with the second user. The first user may then send the application information related to the meeting request using SIP signaling to the second user. The application information may have the following format:
<AppData> ICAL:Start Time/End Time: Attachment1-Slide 1 </APPData> or
<AppData> Calendar Application:Start Time/End Time: Attachment1-Slide 1 </APPData>.

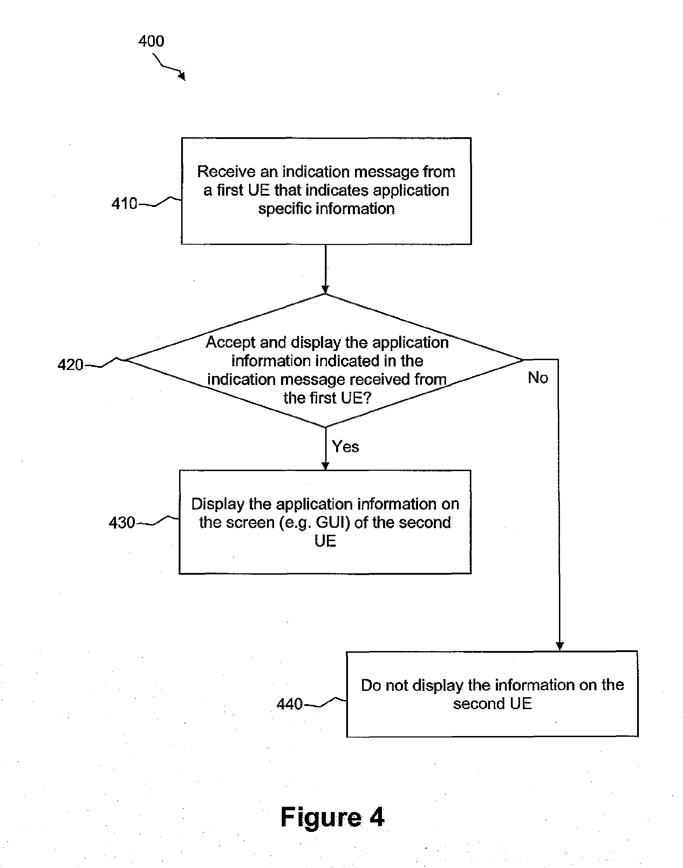

Figure 4 illustrates an embodiment of another method 400 for displaying information on the second UE 120 that may be indicated by the first UE 120. The method 400 may be implemented at the second UE 120. At step 410, the second UE 120 may receive an indication message from the first UE 120 that may indicate the application specific information to the second UE 120. For example, the second UE 120 may receive a SIP message upon starting or during a phone call or a chat session with the first UE 120. In some cases, the application specific information may be requested by the second user from the first user. Upon receipt of the request from the second UE 120, the first UE 120 may indicate the application information in the SIP message and send the SIP message to the second UE 120.

At step 210, the second UE 120 may prompt the second user to accept and display the application information indicated in the indication message received from the first UE 120. For example, upon receiving the SIP message, the second UE 120 may display a message on its screen and wait for an input from the second user to display the application information on the screen of the second UE 120. If the second user decides to view the application information on the second UE 120, the method 400 may proceed to step 430. Otherwise, the method 400 may proceed to step 440.

At step 430, the second UE 120 may display the application information on its screen, via a Graphical User Interface (GUI). For instance, the GUI may transition into a hybrid/split window view that shows both a view of the call details and a second view that includes the application or related information, such as the email or calendar content. The second UE 120 may use the information in the indication message to show or display a specified message, email, or any other application or information in the second window view. As such, both the first and second window views may be opened on the second UE 120. For example, the first and second widow views may be cascaded, tiled horizontally, tiled vertically, or arranged in any other way on the screen. In another embodiment, the GUI on the second UE 120 may transition from the first call view into the second application view, e.g. while maintaining the call with the first UE 120.

Alternatively at step 440, the second UE 120 may not display the application or related information on its screen, e.g. according to second user's choice. Thus, the second user may continue the call session with the first user without updating the screen on the second UE 120.

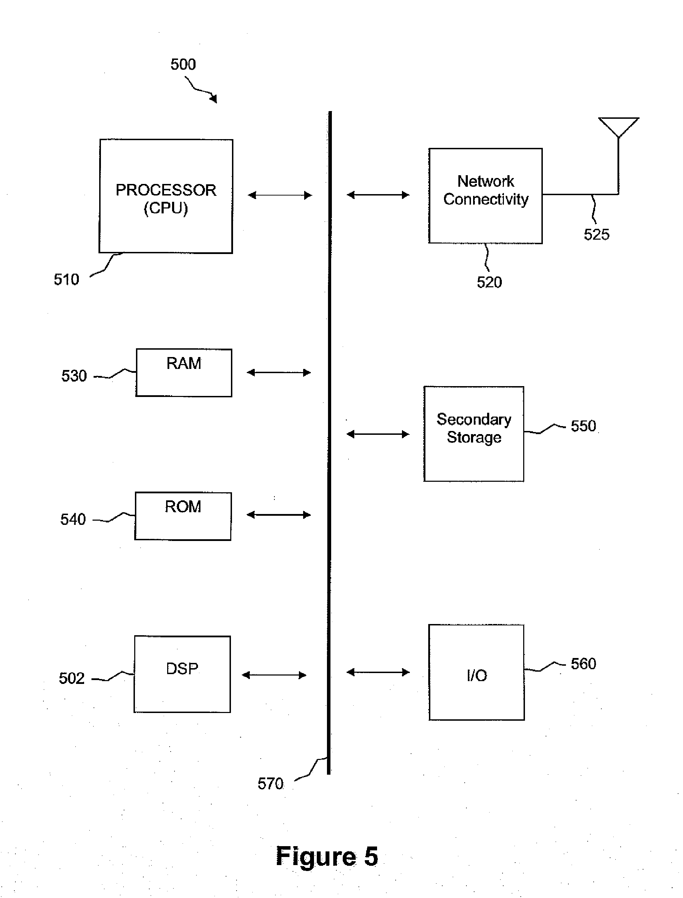

The first UE 120, the second UE 120, and other components described above might include a processing component that is capable of executing instructions related to the actions described above. Figure 5 illustrates an example of a system 500 that includes a processing component 510 suitable for implementing one or more embodiments disclosed herein. In addition to the processor 510 (which may be referred to as a central processor unit or CPU), the system 500 might include network connectivity devices 520, random access memory (RAM) 530, read only memory (ROM) 540, secondary storage 550, and input/output (I/O) devices 560. These components might communicate with one another via a bus 570. In some cases, some of these components may not be present or may be combined in various combinations with one another or with other components not shown. These components might be located in a single physical entity or in more than one physical entity. Any actions described herein as being taken by the processor 510 might be taken by the processor 510 alone or by the processor 510 in conjunction with one or more components shown or not shown in the drawing, such as a digital signal processor (DSP) 502. Although the DSP 502 is shown as a separate component, the DSP 502 might be incorporated into the processor 510.

The processor 510 executes instructions, codes, computer programs, or scripts that it might access from the network connectivity devices 520, RAM 530, ROM 540, or secondary storage 550 (which might include various disk-based systems such as hard disk, floppy disk, or optical disk). While only one CPU 510 is shown, multiple processors may be present. Thus, while instructions may be discussed as being executed by a processor, the instructions may be executed simultaneously, serially, or otherwise by one or multiple processors. The processor 510 may be implemented as one or more CPU chips.

The network connectivity devices 520 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, GSM radio transceiver devices, worldwide interoperability for microwave access (WiMAX) devices, and/or other well-known devices for connecting to networks. These network connectivity devices 520 may enable the processor 510 to communicate with the Internet or one or more telecommunications networks or other networks from which the processor 510 might receive information or to which the processor 510 might output information. The network connectivity devices 520 might also include one or more transceiver components 525 capable of transmitting and/or receiving data wirelessly.

The RAM 530 might be used to store volatile data and perhaps to store instructions that are executed by the processor 510. The ROM 540 is a non-volatile memory device that typically has a smaller memory capacity than the memory capacity of the secondary storage 550. ROM 540 might be used to store instructions and perhaps data that are read during execution of the instructions. Access to both RAM 530 and ROM 540 is typically faster than to secondary storage 550. The secondary storage 550 is typically comprised of one or more disk drives or tape drives and might be used for non-volatile storage of data or as an over-flow data storage device if RAM 530 is not large enough to hold all working data. Secondary storage 550 may be used to store programs that are loaded into RAM 530 when such programs are selected for execution.

The I/O devices 560 may include liquid crystal displays (LCDs), touch screen displays, keyboards, keypads, switches, dials, mice, track balls, voice recognizers, card readers, paper tape readers, printers, video monitors, or other well-known input devices. Also, the transceiver 525 might be considered to be a component of the I/O devices 560 instead of or in addition to being a component of the network connectivity devices 520.

Various combinations of the components of the system 500, including memory, hardware, firmware, software or others may be referred to herein as a "component".

In an embodiment a UE is provided. The UE comprising at least one component configured to send an indication message that indicates application information for a communications session, wherein the indication message comprises data to indicate application information to a recipient for display by the recipient during a communication session with the UE.

In another embodiment, a method implemented on a UE is provided. The method comprising generating data for application information for a communications session, and sending an indication message that indicates the application information for use to display the application information by a recipient of the indication message during the communications session.

The UE, wherein the indication message is a session initiation protocol (SIP) INVITE message.

The UE, wherein the indication message comprises a GUID that indicates the application information.

The UE, wherein the GUID is generated using application data or name, subject, reference ID or combinations thereof.

The UE, wherein the application information corresponds to a scheduled task and the GUID comprises a start/end time for the scheduled task.

The UE, wherein the application information corresponds to an email and the GUID comprises a reference ID or a hash of related fields.

In another embodiment, a UE is provided. The UE comprising at least one component configured to receive an indication message that indicates application information for communications session, wherein the indication message comprises data to indicate application information to a recipient for display by the recipient during a communication session with the UE.

The UE, wherein the communications session is a real-time communications session that is established during a voice call.

The UE, wherein the communications session is a real-time communications session that is established in a chat session.

The UE, wherein the application information corresponds to a scheduled meeting.

The UE, wherein the application information corresponds to an email.

The UE, wherein the indication message comprises a GUID that specifies a selected email.

The UE, wherein the application information corresponds to a web page content.

The UE, wherein the indication message is a SIP message.

The UE, wherein the indication message is sent in an USSD message.

The UE, wherein the indication message is sent in a SMS message.

The UE, wherein the indication message is sent in an IP message.

The UE, wherein the application information is stored at the UE.

The UE, wherein the application information is sent to the UE in the indication message.

In another embodiment a UE is provided. The UE comprising at least one component configured to support a method comprising receiving an indication message that indicates application information for a communications session, and displaying the application information on a user interface of the UE during the communications session.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. A user equipment (UE), comprising:
at least one component configured to send an indication message that indicates application information for a communications session,
wherein the indication message comprises data to indicate application information to a recipient for display by the recipient during a communication session with the UE.

2. A method implemented on a user equipment (UE), comprising:
generating data for application information for a communications session; and sending an indication message that indicates the application information for use to display the application information by a recipient of the indication message during the communications session.

3. The UE of claim 1 or claim 2, wherein the communications session is a real-time communications session that is established in a phone call or a chat session.

4. The UE of claim 1 or claim 2, wherein the application information corresponds to a scheduled meeting, an email, or a web page content.

5. The UE of claim 1 or claim 2, wherein the indication message is a session initiation protocol (SIP) message.

6. The UE of claim 1 or claim 2, wherein the indication message is sent in an Unstructured Supplementary Service Data (USSD) message, a Short Message Service (SMS) message, or an Internet Protocol (IP) message.

7. The UE of claim 1 or claim 2, wherein the application information is stored at the recipient of the indication message.

8. The UE of claim 1 or claim 2, wherein the application information is sent to the recipient of the indication message in the indication message.

9. The UE of claim 1 or claim 2, wherein the indication message is sent using an application displayed on the UE.

10. The UE of claim 2, wherein the method further comprising receiving a request for the application information from the recipient of the indication message before sending the indication message.

11. The UE of claim 1 or claim 2, wherein the indication message is used to switch a user interface of the recipient of the indication message into a hybrid/split window view that shows both a first view of the communications session and a second view of the application information.

12. The UE of claim 1 or claim 2, wherein the indication message is used to switch a user interface of the recipient of the indication message from a first view of the communications session to a second view of the application or application information.

13. The UE of claim 1 or claim 2, wherein the application information is displayed on the recipient of the indication message during the communications session upon the reception of the indication message.

14. The UE of claim 1 or claim 2, wherein the application information is displayed on the recipient of the indication message during the communications session if a user accepts to display the application information.

15. The UE of claim 1 or claim 2, wherein the communications session is established using a first protocol and the indication message is sent using a second separate protocol.

## Amended claims

### Amended claims in accordance with Rule 137(2) EPC.

**1.** A user equipment (UE), comprising:
at least one component configured to send an indication message that indicates application information for a communications session,
wherein the indication message comprises data to indicate application information to a recipient for display by the recipient during a communication session with the UE, and
wherein the indication message further comprises information that identifies a specific application.

**2.** A method implemented on a user equipment (UE), comprising:
generating data for application information for a communications session; and sending an indication message that indicates the application information for use to display the application information by a recipient of the indication message during the communications session,
wherein the indication message further comprises information that identifies a specific application.

**3.** The UE of claim 1 or the method of claim 2, wherein the communications session is a real-time communications session that is established in a phone call or a chat session.

**4.** The UE of claim 1 or the method of claim 2, wherein the application information corresponds to a scheduled meeting, an email, or a web page content.

**5.** The UE of claim 1 or the method of claim 2, wherein the indication message is a session initiation protocol (SIP) message, and wherein the specification application identified in the SIP message is used for enabling the recipient to at least one of display, locate, retrieve, and open the application information.

**6.** The UE of claim 1 or the method of claim 2, wherein the indication message is sent in an Unstructured Supplementary Service Data (USSD) message, a Short Message Service (SMS) message, or an Internet Protocol (IP) message.

**7.** The UE of claim 1 or the method of claim 2, wherein the application information is stored at the recipient of the indication message prior to the indication message being sent to the recipient.

**8.** The UE of claim 1 or the method of claim 2, wherein the application information is displayed to the recipient of the indication message in the indication message.

**9.** The UE of claim 1 or the method of claim 2, wherein the indication message is sent using an application displayed on the UE.

**10.** The method of claim 2, further comprising sending the indication message upon receiving a request for the application information from the recipient.

**11.** The UE of claim 1 or the method of claim 2, wherein the indication message is used to switch a user interface of the recipient of the indication message into a hybrid/split window view that shows both a first view of the communications session and a second view of the application information.

**12.** The UE of claim 1 or the method of claim 2, wherein the indication message is used to switch a user interface of the recipient of the indication message from a first view of the communications session to a second view of the application or application information.

**13.** The UE of claim 1 or the method of claim 2, wherein the application information is displayed on the recipient of the indication message during the communications session upon the reception of the indication message.

**14.** The UE of claim 1 or the method of claim 2, wherein the application information is displayed on the recipient of the indication message during the communications session if a user accepts to display the application information.

**15.** The UE of claim 1 or the method of claim 2, wherein the communications session is established using a first protocol and the indication message is sent using a second separate protocol.
